# NEW EUROPEAN PATENT SPECIFICATION

(11) **EP 0 277 687 B2**
(45) Date of publication and mention of the opposition decision: **23.12.1998**
(45) Mention of the grant of the patent: 18.05.1994
(21) Application number: 88200136.5
(22) Date of filing: 27.01.1988
(51) Int. Cl.: C08F 279/04, C08F 279/02

(54) **Rubber-reinforced monovinylidene aromatic polymer resins and a method for their preparation**
Kautschukmodifizierte Vinylaromat-Polymerharze und Verfahren zu ihrer Herstellung
Résines de polymère vinyl-aromatique renforcées par du caoutchouc et leur méthode de préparation

(30) Priority: 28.01.1987 NL 8700208
(43) Date of publication of application: 10.08.1988
(73) Proprietor: THE DOW CHEMICAL COMPANY, Midland, Michigan 48674 (US)
(72) Inventor: Alle, Narasaiah, Baton Rouge Louisiana 70816 (US); Savenije, Hermanus Bernardus, NL-4532 KC Terneuzen (NL); Roovers, Thomas Maria, NL-4535 AC Terneuzen (NL)
(74) Representative: Smulders, Theodorus A.H.J., Ir.

(56) References cited:
- EP-A- 0 029 622
- EP-A- 0 054 141
- GB-A- 2 129 433
- US-A- 4 096 205
- US-A- 4 183 877
- US-A- 4 639 494
- CHEMICAL ABSTRACTS, vol. 100, no. 26, June 1984, page 38, abstract no. 210982f, Columbus, Ohio, US; & JP-A-59 24 711 (JAPAN SYNTHETIC RUBBER CO., LTD) 08-02-1984
- Technical Information "Asaprene 700A (PBR)", Asahi Chemical Industry Co., Tokyo
- Kirk-Othmer Encyclopedia of Chemical Technology, 3rd Ed., vol. 21,pp. 810-813

## Description

This invention relates to rubber-reinforced monovinylidene aromatic i.e. styrenic) polymer resins wherein a radial-type or branched rubber is used and to a method for preparing these resins using mass polymerization techniques.

Rubber-reinforced styrenic polymer resins are employed in a wide variety of commercial applications such as packaging, refrigerator linings. furniture, domestic appliances and toys.

One well-known example of a rubber-reinforced polymer is a copolymer of a monovinylidene aromatic monomer such as styrene and an unsaturated nitrile such as acrylonitrile having particulates of the rubcer dispersed throughout the copolymer matrix phase (commonly referred to as "ABS"). A second example of a rubber-reinforced polymer is high impact polystyrene (commonly referred to as "HIPS") which comprises a continuous matrix phase of a polystyrene having particulates of rubber, generally an alkadiene rubber, dispersed throughout.

It is well-known that physical properties of rubber-reinforced resins such as toughness. (i.e., the combination of elongation and impact strength) at both room and lower temperatures, are affected by the size as well as the chemical composition and morphology, of the dispersed rubber particles and or the concentration of rubber in the rubber-reinforced polymer resin.

Heretofore, rubber-reinforced resins have been prepared using a variety of polymerization methods One conventional method for preparing the rubber-reinforced polymers consists of mass polymerization techniques. These techniques involve dissolving the rubber in the monovinylidene aromatic monomer and other obtionally employed monomers and/or diluents and subsequently polymerizing the monomer(s). The resulting non-rubbery (co)polymer initially forms a discrete, discontinuous phase until, after sufficient polymerization, its relative phase volume becomes greater and the ruber separates as a plurality of particles dispersed through a now continuous pnase of the non-rubbery (co)polymer (so-called "phase inversion"). Polymerization is completed and any diluent or unreacted monomer(s) thereafter is removed from the resulting product. (See for example, U.S. Patent No. 3.243.841). A similar process involves a combination of mass and suspension polymerization techniques wherein the polymerization mixture, following phase inversion, is suspended in water and polymerization completed. (See, for example, U.S. Patent No. 3.509.237).

Mass or mass/suspension polymerization techniques are suitably employed in the preparation of HIPS products having disperse rubber particles of a desirably small particle size. In addition, ABS resins can economically and effectively be prepared using either mass or mass/suspension polymerization techniques. Unfortunately, ABS resins having the desired balance of physical properties have not heretofore been prepared using conventional mass or mass suspension polymerization techniques with certain high molecular weight rubbers such as an essentially linear, high molecular weight, low-cis homopolymers of butadiene. Specifically, although the particle size of the dispersed rubber phase can be reduced by increasing the rate of mechanical agitation of the polymerization mixture, using conventional mass polymerization techniques the high molecular weight rubber cannot effectively be dispersed throughout the copolymer matrix phase at a desirably small particle size (i.e., at a volume average particle size of less than 1.5 micron) and a sufficiently high concentration to impart the desired properties to the final product. The molecular weight of the linear polybutadiene rubber can be reduced to prepare the rubber at a smaller particle size and/or to prepare an ABS at higher levels of rubber. Unfortunately, the properties of the resulting rubber-reinforced product are generally less than desired.

In an alternative method for preparing rubber-reinforced styrenic polymer resins, particularly ABS type resins, pre-formed rubber particles are employed in the preparation of the rubber-reinforced resin. The pre-formed rubber particles are then mixed with the monovinylidene aromatic and unsaturated nitrile prior, during or subsequent to the polymerization of these monomers. In general, emulsion polymerization techniques are employed to prepare the pre-formed rubber particles which then comprise dense rubber droplets of coagulated latex. Using these techniques, desirably small rubber particles can be prepared from essentially all rubbers which can be made using emulsion polymerization techniques. Unfortunately, significant ccsts are incurred in the preparation of the rubber panicles using emulsion polymerization techniques and the emulsion polymerization aids such as the emulsifiers often have undesirable effect on the properties of the resulting ABS resin product. Moreover, a relatively high concentration of the emulsion polymerized rubber particles is generally required to impart the desired balance of properties to the resulting rubber-reinforced copolymer product and, even at these high rubber concentrations, it is still difficult to obtain the desired impact strength.

There have been several attempts to overcome these types of problems. For example, in U.S Patent No 4.096.205 linear rubbers having reduced viscosities (Mooney and solution), due to comonomer content and molecular weight, are used in HIPS In U.S Patent No 4.183.877 radial-type rubber materials are taught to be useful in the preparation of rubber modified polymers, primarily high impact polystyrene, which rubbers have a cis unit content in the range of 20 to 85 percent and 15 to 35 percent 1.2-vinyl units with Mooney to solution viscosity ratios in the range of 0.33 to 0.67.

In Japanese Patent Application 24 711 similar rubbers are taught for similar uses, which rubbers are prepared using a tin-containing coupling agent to produce a 1.2-vinyl unit content of 10 to 30 percent and a Mooney viscosity in the range of 20 to 100. However, there is no teaching of the necessary rubber solution viscosities nor their relation to Mooney viscosities. US Patent No. 4.639.494 further discloses the use in styrenic polymers of selected radial-type rubbers wherein the solution viscosity is required to be above 60 mPas (cps) and the ratio of solution to Mooney viscosities is in the range of 0.7 to 1.8. Since there is always an interest in further improved products and processes in this area and in utilizing broad ranges of rubbers, the present invention has been developed to provide products with improved physical property combinations and processes for their preparation.

Accordingly, in one aspect, the present invention is a rubber-reinforced monovinylidene aromatic polymer resin characterized in that it comprises a radial-type or branched rubber present in from 7 to 30 weight percent based on the weight of the polymer and rubber, wherein the rubber
(a) has a solution viscosity of less than 60 mPas (cps).
(b) has a Mooney viscosity of less than 85, and
(c) has a ratio of Mooney viscosity to solution viscosity of at least 1.1

In another aspect, the present invention is a process for the preparation of a rubber-reinforced monovinylidene aromatic polymer, where the rubber is present in from 7 to 30 weight percent based on the weight of the polymer and rubber, comprising the steps of
(i) mass polymerizing in the presence of a dissolved rubber one or more monovinylidene aromatic monomers to the desired degree of conversion and
(ii) subjecting the resultant mixtures to conditions sufficient to remove any unreacted monomers and cross-link the rubber; further characterized in that the rubber is a radial or branched rubber and:
(a) has a solution viscosity of less than 60 mPas (cps).
   (b) has a Mooney viscosity of less-than 85, and
   (c) has a ratio of Mooney viscosity to solution viscosity of at least 1.1

Specifically, the method comprises mass polymerizing a solution of one or more monovinylidene aromatic compounds, the rubber and optionally, one or more unsaturated nitrile compounds and/or other ethylenically unsaturated monomers at conditions sufficient to form a copolymer of the monovinylidene aromatic(s) and, if employed, the unsaturated nitrile(s) and other comonomer(s) until phase inversion of the mass polymerization mixture and subsequent sizing of the rubber. Following phase inversion and the sizing of the rubber, polymerization is completed, using either mass or suspension polymerization techniques. If using mass polymerization techniques, subsequent to obtaining the desired conversion, the polymerization mixture is subjected to conditions sufficient to remove the unreacted monomers and/or to cross-link the rubber. In a preferred embodiment the rubber employed is a radial-type rubber having the above-specified Mooney and solution viscosities and viscosities relationship.

Rubber-reinforced products, including ABS-type resins, can be prepared having the radial-type or branched rubber dispersed as particles of a desirably small particle size using mass or mass/suspension polymerization techniques. Specifically, the rubber can readily be dispersed throughout the continuous copolymer phase as discrete particles having a desirably small particle size upon phase inversion and subsequent sizing. This small particle size can be achieved without using excessive mechanical energy (i.e., agitation) which normally requires putting excessive strain on polymerization equipment. The preparation of an ABS type copolymer resin having a relatively high molecular weight rubber dispersed at a sufficiently small particle size and desirably high concentrations cannot conventionally be achieved using a linear, high molecular weight rubber in typical mass polymerization techniques due to their relatively higher viscosities at the same molecular weights. Moreover, the radial type or branched rubbers are also suitably employed in preparing other rubber-reinforced polymers such as HIPS.

The rubber-reinforced polymers of the present invention which contain the high molecular weight, low solution viscosity radial-type or branched rubber can be prepared so as to exhibit an excellent balance of properties. For example, an ABS type resin containing the radial type or branched rubber can be prepared having a surprisingly high practical toughness (i.e. Impact resistance) with a ductile fracture mechanism and a surprisingly high degree of gloss which resin will maintain good properties (e.g., elongation and impact strength) at both room and lower temperatures (e.g., -20°C). Therefore, the rubber-reinforced polymers of this invention are useful in a wide variety of applications such as automotive parts, packaging, refrigerator liners, household appliances, toys and furniture.

The rubber-reinforced polymers of the present invention preferably comprise (1) a polymer matrix of a polymer derived from at least one monovinylidene aromatic monomer and (2) a radial type rubber prepared from a branched alkadiene polymer dispersed throughout the polymer matrix. Representative monovinylidene aromatic monomers include stryrene; alkyl-substituted styrenes such as alpha-alkylstyrenes (e.g., alpha-methylstyrene and alpha-ethylstyrene) and ring-substituted styrenes (e.g., vinyl toluene. particularly para-vinyltoluene and ortho-ethylstyrene, tert-butylstyrene and 2.4-dimethylstyrene); ring-substituted halogenated styrenes such as chlorostyrene and 2,4-dichlorostyrene; styrene substituted with both a halogen and an alkyl group such as 2-chloro-4-methylstyrene and vinyl anthracene and mixtures thereof In general, the preferred monovinylidene aromatic monomer is styrene or a combination of styrene and alpha-methylstyrene (advantageously, from 10 to 50, more advantageously from 15 to 40, weight percent of the alpna-methylstyrene. based un the total weight of the styrene and alpha-methylstyrene). Styrene is the most preferred monovinylidene aromatic compound.

The present invention is particularly useful in the preparation of an ABS type resin wherein the rubber-reinforced polymer comprises a copolymer matrix of one or more monovinylidene aromatic compound(s) and one or more unsaturated nitrile(s). Representative unsaturated nitriles are acrylonitrile, methacrylonitrile, ethacrylonitrile and mixtures thereof Preferred of the unsaturated nitriles is acrylonitrile.

The amounts of the monovinylidene aromatic compound(s) and unsaturated nitrile(s) most advantageously employed herein will vary depending on the physical and chemical properties desired in the final, rubber-reinforced product.

In general, when the rubber-reinforced copolymer is desired, it will advantageously comprise from 5 to 35, preferably from 15 to 25, weight percent of the unsaturated nitrile and from 95 to 65, preferably from 85 to 75, weight percent of the monovinylidene aromatic compound based on the total weight of the monovinylidene aromatic compound and unsaturated nitrile.

Other comonomers can also be employed in combination with the unsaturated nitrile(s) and monovinylidene aromatic compound(s). Representative of such other comonomers are the conjugated dienes such as butadiene and isoprene: the ethylenically unsaturated carboxylic acids and esters thereof such as acrylic acid, methacrylic acid, methylacrylate, methylmethacrylate, ethylacrylate, butyl acrylate and 2-ethylhexylacrylate; the maleimides such as n-phenyl maleimide; the ethylenically unsaturated amides such as acrylamide and methacrylamide: vinylidene chloride and vinylidene bromide; vinyl esters such as vinyl acetate and the like. If employed, these comonomers will generally be employed in amounts less than 50, more generally less than 35, weight percent based on a total weight of the total monomers employed in preparing the rubber-reinforced product.

Suitable rubbers for use herein include both (1) a so-called radial or star rubber having three or more polymer segments bonded to a single polyfunctional element or compound or (2) a branched rubber having a cis content of less than 75 percent and (a) at least one subordinate chain of significant length or (b) a significant number of subordinate chains of sufficient length such that the viscosity of the rubber is less than the viscosity of a linear polymer of the same monomeric components and same molecular weight. The essential requirement for the rubbery material to be used according to the present invention is that it has a relatively high average molecular weight and have a relatively low solution viscosity and Mooney viscosity. the ratio of Mooney viscosity to solution viscosity having the previously specified value. The solution viscosity for the rubbery materials will be below 60 mPas (cps) while the Mooney viscosity will be less than 85. Regarding the value of the ratio of Mooney to solution viscosities, it has been found that when a copolymeric matrix polymer is being reinforced (e.g. ABS), the ratio of Mooney to solution viscosity can be somewhat lower (1.1 and greater) than when a monovinylidene aromatic homopolymer is being reinforced (e.g. HIPS). In the latter case a slightly higher minimum value (1 1 and greater, preferably 1.3 and greater) is needed to obtain the optimum physical properties according to the present invention.

The radial-type or branched rubbers preferably employed in the practice of the present invention are those polymers and copolymers which exhibit a second order transition temperature which is not higher than 0°C and preferably not higher than -20°C as determined using conventional techniques, e.g., ASTM Test Method D-746-52 T Highly preferred rubbers are alkadiene polymers.

Suitable alkadienes are 1,3-conjugated dienes such as butadiene, isoprene, chloroprene or piperylene. Most prefered are homopolymers (excepting any coupling monomers) prepared from 1,3-conjugated dienes. with homopolymers of 1,3-outadiene being especially preferred. Alkadiene copolymer rubbers containing small amounts. for example up to 10 or 15 weight percent, of other monomers such as monovinylidene aromatics can also be employed if the rubbers meet the other qualifications described herein. Comonomer content can, however, result in unacceptably low Mooney viscosity values.

Polymers having random branching, as well as methods for their preparation, are known in the art and reference is made thereto for the purpose of this invention Representative branched rubbers and methods for their preparation are described in Great Britain Patent No 1,130,485 and in an article by R. N. Young and C. J. Fetters in the journal Macromolecules, Vol II, No 5, p 8 The randomly branched rubbers will exhibit a cis content of less than 75 percent. Preferably, the cis content of the randomly branched rubbers will be from 30 to 60 percent.

"Radial" or "star" polymers, commonly referred to as polymers having designed branching are conventionally prepared using a polyfunctional coupling agent or a polyfunctional initiator. Methods for preparing star or radial polymers having designed branching are well-known in the art. Methods for preparing a polymer of butadiene using a coupling agent are illustrated in U.S. Patent Nos 4,183,877; 4,340,690; 4,340,691 and 3,668,162 and Japanese Patent 59-24 711 whereas methods for preparing a polymer of butadiene using a polyfunctional initiator are illustrated in U.S. Patent Nos. 4.182.818; 4,264,749; 3.668.263 and 3,787,510.

As known by those skilled in the art, various techniques such as control of the branching and molecular weight control can be used to adjust and tailor these polymers to achieve the necessary solution and Mooney viscosities, as well as the ratio of these two.

The specific rubber most advantageously employed in preparing the rubber-reinforced products of the present invention is dependent on a variety of factors including the specific polymer matrix, the desired particle size and the concentration of the disperse rubber phase. It has been found that the solution Viscosity of the rubber has a dramatic impact on the particle size at which the rubber can be dispersed throughout the polymer matrix phase using mass or mass/suspension polymerization techniques. Specifically, a linear, high molecular weight, low-cis homopolymer of butadiene such as Diene 55 sold by the Firestone Tire & Rubber Co., HX 529-C sold by Bayer, Intene 55 sold by International Synthetic Rubber and Asadene 55 sold by Asahi Chemical exhibit a relatively high solution viscosity. These high solution viscosities render it difficult to prepare a rubber-reinforced product using mass or mass/suspension techniques having a rubber dispersed at a desirably small particle size and a sufficiently high concentration throughout the polymer matrix phase, particularly in the preparation of ABS type resins.

Alternatively, the solution viscosity of a radial-type alkadiene polymer will generally be less than a linear polymer or copolymer of the same monomeric components and same molecular weights. Advantageously. to prepare a rubber-reinforced resin using mass or mass;suspension polymerization techniques, the solution viscosity of the rubber of the radial-type alkadiene polymer, as measured as a 5 weight percent solution in styrene, will be less than 60, more advantageously less than or equal to 55, most advantageously less than or equal to 50, mPas (centipoise (cps)) at 25°C when the viscosity is measured using a Canon-Fenski capillary viscometer (Capillary No. 400. 1.92 mm inside diameter). Alternatively, the solution viscosity of a linear, high molecular weight rubber such as Diene 55, as measured as a five weight percent solution in styrene, is generally in the range from 150 to 180 mPas (centipoise). The minimum solution viscosity of the rubber is not particularly critical to the practice of the invention. In general, branched polymers having a sufficient molecular weight to impart the desired properties to the rubber-reinforced product will exhibit a solution viscosity, as a five weight percent solution in styrene, of at least 20, preferably at least 25, mPas (centipoise). In a preferred range the solution viscosity of the rubber is between 25 and less than 60 most preferably between 30 and less than 60, mPas (centipoise).

The Mooney viscosity values of the radial-type rubbers should be less than 85, preferably less than 70 as measured by DIN 53523. In general, to have a rubber which is sufficiently solid to be handled and processed in a normal fashion, the Mooney viscosity value should be at least 20 and values of at least 40 are preferred. The preferred range for the Mooney value is between 20 and less than 85, more preferably between 20 and 70, most preferably between 35 and 70.

Radial or star polymers, and preferably those where the "arm" segments have been coupled with silicon-based coupling agents, are most preferably employed in the practice of the present invention The cis content of the star or radial rubbers will advantageously be less than or equal to 70 percent, preferably less than or equal to 55 percent and most preferably less than or equal to 50 percent as determined by conventional IR spectrometry techniques.

As mentioned above, it is important for the rubber to have a relatively high molecular weight (weight averaqe molecular weight or Mw). As used herein, the average molecular weight for the rubbers will refer to the higher molecular weight peak if these are two molecular weight peaks present in a GPC analysis of the polymer molecular weight. Due to the non-regularity in the branching and/or coupling reactions or due to the intentional incomplete branching, the radial-type polymers can sometimes exhibit two or more molecular weight peaks, with one molecular weight peak indicating the molecular weight of the uncoupled segments and/or less fully branched or coupled polymers and a second molecular weight peak indicating the molecular weight of the fully coupled or branched polymer. The radial alkadiene polymers advantageously exhibit at least one weight average molecular weight peak of greater than or equal to 150,000 when the molecular weight is determined by the get permeation chromotographic techniques described by ASTM Test Method designated D-3536 (polystyrene standard) and expressed without correction for the differences between rubber and polystyrene standards. More preferably, at least one peak of 250,000 or greater, most preferably 300,000 or greater, is exhibited by the radial polymer. The ratio of the peak weight average molecular weight of the high molecular weight portion versus the peak weight average molecular weight of the low molecular weight portion (when there are two such peaks) is an indication of the degree of branching and/or coupling. In general, when there are two peaks, such ratio is at least 2.5, advantageously from 2.5 to 8, preferably 2.5 to 5, most preferably 3 to 5. In using a continuous, bulk polymerization process, however, the molecular weight distribution will not be as likely to exhibit such peaks, but will instead be a broader distribution of molecular weights.

The most preferred rubbers are the radial or star homopolymers of 1,3-butadiene which have a cis content of from 45 to 70 percent and a weight average molecular weight of from 400,000 to 600,000. This applies to the high molecular weight peak, if there is more than one. In such cases it is preferred that the ratio of the peak molecular weight of the high molecular weight portion is from 3 to 4 times the peak molecular weight of the low molecular weight portion (i.e., the rubber molecule is moderately coupled or branched with 3 or 4 "arms" per molecule).

The amounts of the rubbers most advantageously employed herein, as well as the particle size of this rubber, will depend on many factors including the specific rubber employed, the specific type and amount of other rubbers, if any, employed in combination with the radial or branched rubber, the specific monomers employed in preparing the continuous matrix phase of the rubber-reinforced product and the physical and chemical properties desired in the final, rubber-modified product. In general, to obtain the most desirable balance of physical properties, the rubber-reinforced copolymer product will comprise at least six weight percent rubber based on the total weight of the polymer and rubber. The rubber-reinforced polymers of the present invention will comprise from 7 to 30, preferably from 10 to 25, more preferably from 9 - 18 weight percent rubber based on the weight of the polymer and rubber.

The rubber particle size of the rubber particles containing the radial or branched rubber dispersed throughout the polymer matrix can vary from a volume average particle size of as little as 0.1 micrometer to as much as 5 micrometers or more. However, in preparing an ABS type copolymer matrix resin, the rubber particles are advantageously dispersed throughout the copolymer matrix at a volume average particle size of less than 3, preferably less than 2, micrometers. More preferably, the disperse rubber particles possess a volume average particle size of from 0.1 to 1.2, even more preferably from 0.2 to 1.1, most preferably from 0.2 to 1.0 micrometer. Having selected a rubber having the characteristics as described above, some minor experimentation may be used to determine the rubber particle size which should be achieved in order to produce the optimized balance of product properties for the particular rubber material selected.

The advantages of the present invention are particularly evidenced when mass or mass/suspension techniques are employed to prepare the rubber-reinforced polymer. In this case the rubber particles will contain occlusions of grafted and/or ungrafted polymer as illustrated by rubber particles having the so-called "core/shell" or "cellular" morphologies. Said particle size is the diameter of the particles, including any occlusions, measured using conventional techniques such as a Coulter Counter supplemented by visual phase contrast microscopy or electron microscopy.

In the preparation of the rubber-reinforced polymers, the radial or branched rubber is dissolved in the monomer(s) and the resulting monomer/rubber solution subsequently polymerized. The amount of the rubber initially dissolved in the monomers is dependent on the desired concentration of rubber in the final rubber-reinforced polymer product, the degree of conversion during polymerization and the viscosity of the rubber/monomer solution. Specifically, the viscosity of the rubber/monomer solution is advantageously less than 3000 mPas (centipoise). At higher viscosities, the rubber monomer solution is difficult to process. Provided the viscosity of the monomer/rubber solution is not undesirably high, the rubber monomer solution will generally comprise from 5 to 15, weight percent of the rubber, said weight percent being based on the total amounts of rubber and monomers employed.

Optionally, the monomer/rubber solution will contain an organic liquid diluent. Organic liquid diluents suitably employed are normally liquid organic materials which do not boil at the polymerization conditions employed and which form a solution with the polymerizable monomer(s) and the polymer prepared therefrom. Representative organic liquid diluents include aromatic (and inertly substituted aromatic) hydrocarbons such as toluene. benzene, ethylbenzene and xylene; saturated or inertly substituted, saturated aliphatics having either straight or branched chains of five or more carbon atoms such as heptane, hexane and octane, alicyclic or inertly substituted alicyclic hydrocarbons having five or six carbon atoms such as cyclohexane. Preferred of such organic liquid diluents are the inertly substituted aromatics with ethylbenzene and xylene being most preferred. In general, the organic liquid is employed in amounts sufficient to improve the processability and heat transfer during polymerization. e.g., flow characteristics of the polymerization mixture Such amounts will vary depending on the rubber, monomer and diluent employed. the process equipment and the desired degree of polymerization. In general, if employed. the polymerization mixture will normally contain from 2 to 30 weight percent of the diluent based on the total weight of the rubber, monomer and diluent.

In addition, the mass polymerization mixture will contain other materials and or polymerization aids, e.g., polymerization initiators, chain transfer agents. antioxidant(s) (e.g., an alkylated phenol such as di-tert-butyl-para-cresol or phosphites such as trisnonyl phenyl phosphite), mold release agent (e.g., zinc stereate) and or plasticizer or lubricant such as butyl stearate. mineral oil or dioctyl phthalate, all of which are optionally added to the polymerization mixture before, during or after polymerization.

During the polymerization of the resulting monomer/rubber solution by mass polymerization, the monomers are polymerized with the rubber, which dissolved rubber thereby becomes grafted with a portion of polymerized monomer(s). The balance of polymerized monomer(s) comes out of solution and forms a discontinuous polymer phase dispersed throughout the continuous phase of the solution of rubber (including grafted rubber) and monomer(s). Eventually, after sufficient amounts of the monomer(s) are polymerized, the discontinuous polymer phase becomes a continuous phase with the grafted rubber forming a discontinuous phase dispersed through the continuous polymer phase. This phenomenon is referred to as "phase inversion" which term conventionally refers to the conversion of the polymer, upon the polymerization of sufficient amounts of the polymerized monomer(s), from a discontinuous phase dispersed in the continuous phase of the unpolymerized monomer(s), through the point where there is no distinct continuous and no distinct discontinuous phase in the polymerization mixture, to a continuous polymer phase having the rubber dispersed as discrete particles therethrough. Preferably, at phase inversion, the rubber is sufficiently grafted such that the disperse rubber particles, following initial sizing, are capable of retaining essentially the same average particle size and morphological properties throughout the remainder of the polymerization process.

In general, continuous methods are employed for mass polymerizing the monovinylidene aromatic compound in the monomer/rubber solution. The polymerization is preferably conducted in one or more substantially linear, stratified flow or so-called plug-flow type reactors such as described in U.S. Patent No. 2,727,884 which may or may not comprise recirculation of a portion of the partially polymerized product. Alternatively, the mass polymerization can be conducted in a stirred tank reactor wherein the contents of the reactor are essentially uniform throughout. This stirred tank reactor can advantageously be employed in combination with (prior to) one or more "plug-glow" type reactors.

To assist in preparing a disperse rubber phase at a desirably small particle size, it is often desirable to use the techniques described in European Patent Application, Publication No. 0,103.657. However, due to the low solution viscosities exhibited by the radial or branched rubber as compared to the high solution viscosities exhibited by a linear, high molecular weight homopolymer of butadiene, the techniques described by this European Patent Application are not always necessary or desired.

The temperatures at which polymerization is most advantageously conducted are dependent on a variety of factors including the specific initiator, if any, employed and the type and concentration of rubber, monomer(s) and reaction diluent employed. In general, polymerization temperatures from 80°C to 130°C are employed prior to phase inversion with temperatures from 100°C to 190°C being employed subsequent to phase inversion. Mass polymerization at such elevated temperatures is continued until the desired conversion of the monomer(s) to polymer is obtained. Generally, conversion into polymer of from 55 to 90. preferably from 70 to 85, weight percent of the monomer(s) added to the polymerization system (i.e., monomer added in the feed and any additional stream, including any recycle stream) is desired.

Following conversion of a desired amount of monomer to polymer, the polymerization mixture is then subjected to conditions sufficient to cross-link the rubber and remove any unreacted monomer, reaction diluent if employed), and any other volatile materials. This processing step is advantageously conducted employing conventional devolatilization techniques such as introducing the polymerization mixture into a devolatilizing chamber, flashing off the monomer and other volatiles at elevated temperatures. e.g., from 200° to 300°C. under vacuum and removing them from the chamber.

Alternatively, a combination of mass and suspension polymerization techniques can be employed Using said techniques, following phase inversion and subsequent size stabilization of the rubber particles, the partially polymerized product can be suspended with or without additional monomer(s) in an aqueous medium which contains a polymerization initiator and the polymerization subsequently completed. The rubber-reinforced polymer is subsequently separated from the aqueous medium by acidification, centrifugation or filtration. The recovered product is then washed and dried.

It is often advantageous that the rubber-reinforced polymer products of the present invention contain aisoerse, rubber particles of the same or different rubbers having two or more distinct partic!e sizes. e.g., rubber particles exhibiting a bimodal particle size distribution. For example, a rubber-reinforced polymer product raving a bimodal particle size distribution can be prepared by mechanically blending the rubber-reinforced polymer product containing the radial or branched rubber of a first particle size with the desired amounts of another rubber-reinforced polymer containing either the same or a different rubber at a second and different particle size. Alternatively, the partially polymerized product comprising the polymer containing the radial or branched rubber dispersed as particles at a first size can be admixed with a second rubber-containing mixture comprising a solution of the same or different rubber in the same or different monomer(s) and polymerization subsequently completed.

In yet another method, the partially polymerized product comprising a polymer having the radial or branched rubber dispersed as particles of a first particle size is mixed with a partially polymerized product having the same or a different rubber dispersed at a second particle size through the same or different partially polymerized monomer(s). Subsequently, polymerization of the mixture is completed to prepare a rubber-reinforced product having a bimodal particle size distribution.

A preferred rubber-reinforced product having a bimodal rubber particle size distribution comprises rubber particles containing the radial or branched rubber having a volume average diameter of from 0 1 to 1.2 micrometer and rubber particles containing either the radial or branched rubber or a linear high molecular weight, low-cis homopolymer of butadiene such as Diene 55 sold by Firestone Tire & Rubber Co having a larger volume average particle diameter of from 1 to 5 micrometer. Advantageously, the small rubber particles of the radial or branched polymer rubber comprise from 35 to 90 weight percent and the larger rubber particles comprise from 10 to 65 weight percent of the total amounts of rubber present in the rubber-modified product. More preferably, in a bimodal particle size distribution the radial or branched rubber comprises from 40 to 85, most preferably from 50 to 80, weight percent of the rubber, and exhibits a volume average particle size of from 0.2 to 1, most preferably from 0.2 to 0.8, micrometer and the larger rubber particles comprise from 15 to 60, most preferably from 20 to 50, weight percent of the rubber and exhibit a volume average particle size of from 0.8 to 4, most preferably from 1 to 2, micrometer, said weight percents being based on the total weight of the rubber in the rubber-reinforced product.

The linear, high molecular weight, homopolymer of butadiene preferably employed in preparing the rubber-reinforced polymer product having bimodal particle size advantageously has a cis-content of less than 55, more preferably less than 50 and exhibits a weight average molecular weight of at least 325,000, preferably at least 375,000, most preferably from 400.000 to 600.000.

Of the foregoing techniques described as being useful for preparing a rubber-reinforced product having a bimodal particle size distribution, it is generally most advantageous to blend or mix two partially polymerized products, one containing the small particles of the radial or branched rubber and the second containing larger particles of the radial or branched rubber or the linear, high molecular weight, homopolymer of butadiene, and thereafter complete polymerization to form the desired product. Specifically, a solution of monomer(s) and the radial or branched rubber is polymerized at conditions sufficient to form the rubber as a disperse phase having the desired rubber particle size. Similarly, a solution of the desired monomer(s) and the selected radial or branched rubber, or the linear, high molecular weight, homopolymer or butadiene is polymerized at conditions sufficient to form a disperse rubber phase having rubber particles wnich exhibit the desired particle size. When the linear, high molecular weight polybutadiene rubber is used, the particles are advantageously porepared at a desirably small particle size using the techniques described in European Patent Application, Publication No. 103.657. Subsequent to phase inversion and size stabilization of the two partially polymerized streams, the streams are mixed, in a desired ratio, and polymerization completed. In general, mass polymerization techniques are advantageously employed in the preparation of the partial polymerizates and to comolete polymerization after the admixture of the partial polymerizates. Alternatively, but less preferably, once the partial polymerizates are mixed, suspension polymerization tecnniques can be employed to complete polymerization.

The following experiments are set forth to illustrate the advantages of the present invention and should not be construed to limit its scope. In the experiments, all parts and percentages are by weight unless otherwise indicated. Samples were polymerized by the batch polymerization process summarized in Table I or the continuous process summarized in Table II. The resultant ABS polymers as well as the particular rubber material used in its preparation are summarized in Tables III, IV and V and the HIPS prcducts are similarly described in Table VI. In the Tables III-VI the particular polymerization technique is indicated for the various samples. B indicating batch and C indicating continuous.

As shown in Table I below, the batch reactor equipped with agitation, heating and cooling means was supplied with the indicated amounts of styrene, acrylonitrile, rubber ethyl benzene diluent, 1,1-bis-tertiarybutyl peroxycyclohexane free radical initiator and n-dodecyl mercaptan chain transfer agent. The table shows the profile of agitation and temperature over time and indicates the levels of solids observed at various times as well as the subsequent additions to the reactor.

**TABLE I -**

| Batch Polymerizations | | |
|---|---|---|
| Experiment No. | 2 and 3* | C* and 13-15 |
| First Feed | | |
| Styrene | 717 | 83 |
| Acrylonitrile | 255 | - |
| Rubber | 225 | 7 |
| Ethyl Benzene | 300 | 8 |
| Initiator | 0.2 | 0.025 |
| Mineral Oil | - | 2 |
| Agitation/Temp/Time (RPM/°C/hr) | 110/90/2.5 | 100-30/110-170/8 |
| Solids % | 25 | approx. 50-55 |

| Second Feed | | |
|---|---|---|
| Styrene | 67.5 | |
| Acrylonitrile | 22.5 | |
| Rubber | - | |
| Ethyl Benzene | 158 | |
| Initiator | - | |
| Chain Transfer Agent | 2 | |
| Agitation/Temp/Time | 110/115/1 | |
| Solids % | 32 | |
| Agitation/Temp/Time | 70/150/5 | |
| Solids % | 54 | |

| | | |
|---|---|---|
| * Comparative experiment, not an example of the present invention. | | |

As summarized in Table II below, samples are prepared in a continuous polymerization process where the amounts of the various mixture components are supplied to a plug-flow type reactor system. The polymerization reaction occurs while the materials proceed through the reactor. As the reaction mixture proceeds through the reactor the temperature increases from about 90 degrees C at the beginning to about 165 degrees C when the mixture is removed from the reactor. The solids level of the mixture is then in range of 60 to 65 percent by weight. During the polymerization, agitation is supplied as necessary to control the heat transfer and rubber particle size. The average residence time in the reactor is approximately 8 hours. The reaction mixture removed from the fast zone Is heated to 220 to 240°C to remove any remaining volatiles and assist in crosslinking the rubber.

**TABLE II**

| Continuous Polymerizations | | | |
|---|---|---|---|
| Example No. | 1 | 4-8 | 9-12 |
| Monomers | | | |
| Styrene | 62 | 53.3 | 55.3 |
| Acrylonitrile | 13 | 17 | 18 |
| Ethyl Benzene | 20 | 19 | 18 |
| Rubber | 5 | 10.5 | 8.5 |
| Initiator | 0.015 | 0.015 | 0.015 |
| Antioxidant | 0.185 | 0.185 | 0.185 |

In the following tables various test methods are used to determine the values that are reported. The reported rubber particle size is the volume average particle size, in micrometers, as determined using a commercially available particle size analyzer (e.g., a Counter Coulter Model TA II unit) supplemented as necessary by transmission electron microscopy.

The melt flow rate, given in grams per 10 minutes (g 10 min), was measured using the test method designated ASTM D-1238, 230°C and 3.8 Kilograms weight. The Izod Impact resistance (notched) was measured using the test method described by ASTM D-256 and is given in Joules per meter (J.m) The Charpy impact strength. given in kilojoules per square meter (kJ/m²), was measured using the test method of DIN 53453 on injection molded samples prepared at 50°C mold temperature and 220 to 260°C melt temperature. To prepare the Izod. and Charpy tensile test specimens, the rubber-reinforced polymer was injected at an injection pressure which is experimentally determined for each sample by making moldings under increased pressures until a flash molding appeared and then the pressure is reduced to a pressure such that no excess material (flash molding) appeared.

The gloss measurements were made using ASTM test method designated D523-80, 60° angle, on a sample molded at 15°C. The sample was prepared having dimensions of 88mm x 50mm x 2.5mm which is infection molded at a melt temperature of 225 to 235°C. The mold employed was a smooth surface mold having surface roughness factor 0.02. To prepare the test specimen, the rubber-reinforced polymer was injected at an injection pressure at 42 kilopascals and a holding pressure of 5 kilopascals. The gloss was measured 3.5 cm from the side of the sample opposite the point of injection in the middle of the sample width.

Tensile properties (tensile yield and elongation at break) were measured using the test methods of ASTM-D-638 on samples which are injection molded at 50°C mold temperature and 220 to 260°C melt temperature. The yield values are given in mega pascals (MPa) and the elongation values in percentage of the original length (%).

In Table III below, the comparative experiment A is taken from U.S. Patent 4,183,877, where it is identified as Example 9. The rubber particle size, acrylonitrile content and rubber content are not given in that patent but are estimated based on the other information that is provided. This comparative experiment is also generally representative of the teachings of U.S. Patent No. 4,639,494 as applied to a styrenic copolymer with acrylonitrile, with the exception that the relationship between the Mooney and solution viscosities is just outside the range of U S Patent No 4,639,494.

**TABLE III**

| ABS EXPERIMENTS | | | | |
|---|---|---|---|---|
| Experiment No | A* | 1 | 2 | 3* |
| Polymerization | B | C | B | B |
| AN (weight percent) | 27 | 20 | 20 | 20 |

| Rubber | | | | |
|---|---|---|---|---|
| Weight Parts | 6 | 6 | 18 | 18 |
| Particle Size (micrometer) | 3-4 | 0.6 | 1.1 | 1.6 |
| Cis % | 34 | 43 | 43 | 45 |
| Vinyl % | 18.3 | 10 | 10 | 10 |
| Coupling Agert | C | Si | Si | Si |
| Mooney Viscosity | 44 | 55 | 51 | 50 |
| Solution Viscosity mPas (cps) | 87 | 40 | 30 | 50 |
| Mooney Solution | 0 5 | 1 4 | 1 7 | 1 0 |

| Physical Properties | | | | |
|---|---|---|---|---|
| Izod Impact Resistance(J/m) | 74 | 100 | 350 | 400 |
| Tensile Yield (MPa) | 23.4 | 44 | 40 | 38 |
| Elongation at Break (%) | 37 | 30 | 20 | 20 |
| Charpy Impact (kJ/m²) | ** | 7.5 | 18 | 18 |
| Melt Flow Rate ig 10 min) | ** | 5 | 1.6 | 1.4 |
| Gloss (%) | ** | 85 | 70 | 60 |

| | | | | |
|---|---|---|---|---|
| *Comparative experiment, not an example of the present invention | | | | |
| ** Not measured | | | | |

As can be seen from Table III above, in going from a Mooney solution viscosity ratio of 0.5 (Experiment A) to a ratio of 1.4 (Experiment 1) with rubber content held approximately equivalent, surprising improvements are observed in the toughness of the resin. Experiments 2 and 3, although having a higner rubber content and therefore higher overall toughness, show that these benefits are similarly observed for Mooney solution ratios of 1.0 and 1.7.

**TABLE IV**

| ABS EXPERIMENTS | | | | | |
|---|---|---|---|---|---|
| Experiment No | 4 | 5 | 6 | 7* | 8* |
| Polymerization | C | C | C | C | C |
| AN (weight percent) | 21 | 21 | 21 | 21 | 20 |

| Rubber | | | | | |
|---|---|---|---|---|---|
| Weight Parts | 15 | 15 | 15 | 15 | 15 |
| Particle Size (micrometer) | 0.6 | 0 6 | 0 6 | 0 6 | 0 6 |
| Coupling Agent | Si | Si | Si | Si | Si |
| Cis % | 43 | 43 | 43 | 45 | 45 |
| Vinyl % | 10 | 10 | 10 | 10 | 20 |
| Mocney Viscosity | 64 | 51 | 55 | 50 | 37 |
| Soiution Viscosity mPas (cps) | 32 | 30 | 40 | 50 | 47 |
| Mooney Solution | 2 0 | 1 7 | 1 4 | 1 0 | 0.8 |

| Physical Properties | | | | | |
|---|---|---|---|---|---|
| Izod Impact Resistance (J/M) | 320 | 320 | 350 | 185 | 265 |
| Tensile yield (MPa) | 43 | 42 | 45 | 38 | 46 |
| Elongation at Break (%) | 25 | 20 | 20 | 30 | 20 |
| Charpy Impact (kJ/m²) | 16 | 17 | 19 | 12 | 14 |
| Melt Flow Rate (g 10 min) | 2 3 | 2.3 | 1 8 | 2.3 | 3.2 |
| Gloss (%) | 80 | 80 | 85 | 80 | ** |

| | | | | | |
|---|---|---|---|---|---|
| * Comparative experiment, not an example of the present invention | | | | | |
| ** Not Measured | | | | | |

In Table IV above, it can be seen that toughness peaks when the Mooney/solution viscosity ratio is about 1.4.

**TABLE V**

| ABS EXPERIMENTS | | | | |
|---|---|---|---|---|
| Experiment No | 9 | 10 | 11 | 12 |
| Polymerization | C | C | C | C |
| AN (weight percent) | 22 | 22 | 22 | 22 |

| Rubber | | | | |
|---|---|---|---|---|
| Weight Parts | 12 | 12 | 12 | 12 |
| Particle Size (micrometer) | 0 5 | 0 9 | 0.5 | 0.9 |
| Coupling Agent | Si | Si | Si | Si |
| Cis % | 43 | 43 | 43 | 43 |
| Vinyl % | 10 | 10 | 10 | 10 |
| Mooney Viscosity | 51 | 51 | 55 | 55 |
| Solution Viscosity mPas (cps) | 30 | 30 | 40 | 40 |
| Mooney Solution | 1 7 | 1 7 | 1 4 | 1 4 |

| Physical Properties | | | | |
|---|---|---|---|---|
| Izod Impact Resistance (J/m) | 25 | 190 | 280 | 220 |
| Tensile Yield (MPa) | 51 | 40 | 50 | 40 |
| Elongation at Break (%) | 10 | 50 | 20 | 40 |
| Charpy Impact (kJ/m²) | 3 | 12 | 15 | 12 |
| Melt Flow Rate (g/10 min) | 1.8 | 3.0 | 1.8 | 3.0 |
| Gloss (%) | 90 | 60 | 90 | 90 |

In Table V above it is shown that rubber particle size can be used to achieve desired balances between the impact resistance and tensile properties of the compositions according to the invention. With smaller rubber particle sizes the tensile strength can be maximized while larger particles can be used to obtain better impact properties. While this phenomena is known for rubber-modified polymers, the high levels of tensile and impact strength that can be achieved according to this invention, as well as the combinations. are surprising in view of the prior art.

In Table VI below comparative experiment B is taken from U.S. Patent 4,183,877 where it is identified as Comparative Example 5. The rubber content and particle size are not given in that reference but are estimated from other information that is given.

As can be seen in Table VI below, it is necessary when using the radial or branched rubbers to reinforce polystyrene, to have a Mooney Solution ratio greater than 1.02 and 0.8 (Comparative Experiments B and C) to obtain the good combinations of impact and tensile properties. Experiments 13 through 15 show that HIPS products containing the specified radial or branched rubbers have similar unexpectedly increased combinations of impact and tensile properties, which can be optimized or balanced by control of rubber particle size.

**TABLE VI**

| HIPS EXPERIMENTS | | | | | |
|---|---|---|---|---|---|
| Experiment No | B* | C* | 13 | 14 | 15 |
| Polymerization | B | B | B | B | B |

| Rubber | | | | | |
|---|---|---|---|---|---|
| Weight Parts | 8.5 | 8.5 | 8.5 | 8.5 | 8.5 |
| Particle Size (micrometer) | 1.2 | 1.5 | 1.5 | 1.0 | 0.5 |
| Cis % | 34 2 | 45 | 43 | 43 | 43 |
| Vinyl % | 17.9 | 10 | 10 | 10 | 10 |
| Coupling Agent | C | Si | Si | Si | Si |
| Mooney Viscosity | 41 | 40 | 55 | 55 | 55 |
| Solution Viscosity mPas (cps) | 40 | 50 | 40 | 40 | 40 |
| Mooney Solution | 1.02 | 0.8 | 1 4 | 1 4 | 1 4 |

| Physical Properties | | | | | |
|---|---|---|---|---|---|
| Izod Impact Resistance (J/m) | 54 | 54 | 86 | 64 | 23 |
| Tensile Yield (MPa) | 23.5 | 22 | 28 | 32 | 40 |
| Elongation at Break(%) | 20 | 20 | 28 | 10 | 5 |

| | | | | | |
|---|---|---|---|---|---|
| *Comparative experiment, not an example of the present invention | | | | | |

## Claims

1. A rubber-reinforced monovinylidene aromatic polymer resin characterized in that it comprises a radial-type or branched rubber present in from 7 to 30 weight percent based on the weight of the polymer and rubber, wherein the rubber:
(a) has a solution viscosity of less than 60 mPas (cps);
(b) has a Mooney viscosity of less than 85, and
(c) has a ratio of Mooney viscosity to solution viscosity of at least 1.1.

2. A product according to claim 1 wherein the monovinylidene aromatic polymer is a copolymer having polymerized therein an unsaturated nitrile, the rubber solution viscosity is between 20 and less than 60 mPas (cps), and the rubber Mooney viscosity is between 20 and less than 85.

3. A product according to claim 1 wherein the monovinylidene aromatic polymer is polystyrene and the Mooney / solution viscosities is at least 1.3.

4. A product according to claim 1 wherein the rubber is a radial-type comprising three or more polymer segments bonded to a single polyfunctional coupling agent.

5. A product according to claim 1 wherein the rubber is dispersed as discrete, occlusion-containing particles having a volume average particle size in the range of 0.2 to 1.0 micrometer.

6. A process for the preparation of a rubber-reinforced monovinylidene aromatic polymer, where the rubber is present in from 7 to 30 weight percent based on the weight of the polymer and rubber, which comprises the steps of:
(i) mass polymerizing in the presence of a dissolved rubber one or more monovinylidene aromatic monomers to the desired degree of conversion and
(ii) subjecting the resultant mixture to conditions sufficient to remove any unreacted monomers and cross-link the rubber; further characterized in that the rubber is a radial-type or branched rubber and
(a) has a solution viscosity of less than 60 mPas (cps);
(b) has a Mooney viscosity of less than 85, and
(c) has a ratio of Mooney viscosity to solution viscosity of at least 1.1.

7. A process according to claim 6 wherein the monovinylidene aromatic polymer comprises an unsaturated nitrile.

8. A process according to claim 7 wherein in step (i) from 9 to 18 weight percent rubber is dissolved in the monomer solution and optional diluent and the rubber particles in the resultant polymer have an average rubber particle size in the range of 0.2 to 1.0 micrometer.

## Patentansprüche

1. Kautschuk-verstärktes Vinylaromat-Polymerharz, dadurch gekennzeichnet, daß es einen radialen oder verzweigten Kautschuk in einer Menge von 7 bis 30 Gewichtsprozent, bezogen auf das Gewicht des Polymers und des Kautschuks, enthält, der:
(a) eine Lösungs-Viskosität von weniger als 60 mPas (cps),
(b) eine Mooney-Viskosität von weniger als 85, und
(c) ein Verhältnis der Mooney-Viskosität zur Lösungs-Viskosität von mindestens 1,1 besitzt.

2. Produkt nach Anspruch 1, worin das Vinylaromat-Polymer ein Copolymer ist, in das ein ungesättigtes Nitril polymerisiert wurde, wobei die Lösungs-Viskosität des Kautschuks zwischen 20 und weniger als 60 mPas (cps) und die Mooney-Viskosität des Kautschuks zwischen 20 und weniger als 85 beträgt.

3. Produkt nach Anspruch 1, worin das Vinylaromat-Polymer Polystyrol ist und das Verhältnis der Mooney-Viskosität zur Lösungs-Viskosität mindestens 1,3 beträgt.

4. Produkt nach Anspruch 1, worin der Kautschuk ein Kautschuk vom Radial-Typ ist und drei oder mehr Polymersegmente umfaßt, die an ein einzelnes polyfunktionelles Kupplungsmittel gebunden sind.

5. Produkt nach Anspruch 1, worin der Kautschuk in getrennte, Einschlüsse enthaltende Teilchen mit einer durchschnittlichen Volumen-Teilchengröße im Bereich von 0,2 bis 1,0 Mikrometer dispergiert ist.

6. Verfahren zur Herstellung eines Kautschuk-verstärkten Vinylaromat-Polymers, wobei der Kautschuk in einer Menge von 7 bis 30 Gewichtsprozent, bezogen auf das Gewicht des Polymers und des Kautschuks vorhanden ist, welches die Schritte umfaßt:
(i) ein oder mehrere Vinylaromat-Monomere in Gegenwart eines gelösten Kautschuks bis zu dem gewünschten Umwandlungsgrad in Masse zu polymerisieren, und
(ii) das so erhaltene Gemisch Bedingungen zu unterwerfen, die ausreichend sind um nicht umgesetzte Monomere zu entfernen und den Kautschuk zu vernetzen,
weiter dadurch gekennzeichnet, daß der Kautschuk ein radialer oder verzweigter Kautschuk ist und:
(a) eine Lösungs-Viskosität von weniger als 60 mPas (cps),
(b) eine Mooney-Viskosität von weniger als 85, und
(c) ein Verhältnis der Mooney-Viskosität zur Lösungs-Viskosität von mindestens 1,1 besitzt.

7. Verfahren nach Anspruch 6, worin das Vinylaromat-Polymer ein ungesättigtes Nitril enthält.

8. Verfahren nach Anspruch 7, worin in Schritt (i) in der Monomerlösung 9 bis 18 Gew.-% Kautschuk und wahlweise ein Verdünnungsmittel gelöst wird und die Kautschuk-Partikel in dem so erhaltenen Polymer eine durchschnittliche Teilchengröße im Bereich von 0,2 bis 1,0 Mikrometer besitzen.

## Revendications

1. Résine de polymère de composé monovinyl-aromatique, renforcée par un caoutchouc, caractérisée en ce qu'elle comporte un caoutchouc de type radial ou ramifié, présent à raison de 7 à 30 % en poids, par rapport au poids de polymère et de caoutchouc, duquel caoutchouc
a) la viscosité en solution est inférieure à 60 mPa.s (cP),
b) la viscosité Mooney est inférieure à 85, et
c) le rapport de la viscosité Mooney à la viscosité en solution vaut au moins 1,1.

2. Produit conforme à la revendication 1, dans lequel le polymère de composé monovinyl-aromatique est un copolymère au sein duquel est copolymérisé un nitrile insaturé, la viscosité en solution du caoutchouc vaut entre 20 et moins de 60 mPa.s (cP) et la viscosité Mooney du caoutchouc vaut entre 20 et moins de 85.

3. Produit conforme à la revendication 1, dans lequel le polymère de composé monovinyl-aromatique est un polystyrène et le rapport de la viscosité Mooney à la viscosité en solution vaut au moins 1,3.

4. Produit conforme à la revendication 1, dans lequel le caoutchouc est un caoutchouc de type radial, comportant trois segments polymères ou plus, liés à un unique agent polyfonctionnel de couplage.

5. Produit conforme à la revendication 1, dans lequel le caoutchouc est dispersé sous forme de particules discrètes qui contiennent des occlusions et dont la taille moyenne en volume se situe dans l'intervalle allant de 0,2 à 1,0 micromètre.

6. Procédé de préparation d'un polymère de composé monovinyl-aromatique, renforcé par un caoutchouc, où ce caoutchouc est présent à raison de 7 à 30 % en poids, par rapport au poids de polymère et de caoutchouc, lequel procédé comporte les étapes consistant à :
(i) faire polymériser en masse, en présence d'un caoutchouc dissous, un ou plusieurs monomères monovinyl-aromatiques, jusqu'au degré de conversion souhaité, et
(ii) soumettre le mélange résultant à des conditions permettant l'élimination de tout monomère n'ayant pas réagi et la réticulation du caoutchouc,
et caractérisé en outre en ce que le caoutchouc est un caoutchouc de type radial ou ramifié
a) dont la viscosité en solution est inférieure à 60 mPa.s (cP),
b) dont la viscosité Mooney est inférieure à 85, et
c) dont le rapport de la viscosité Mooney à la viscosité en solution vaut au moins 1,1.

7. Procédé conforme à la revendication 6, dans lequel le polymère de composé monovinyl-aromatique comporte un nitrile insaturé.

8. Procédé conforme à la revendication 7, dans lequel, dans l'étape (i), de 9 à 18 % en poids de caoutchouc sont dissous dans la solution de monomères et un éventuel diluant, et la taille moyenne des particules de caoutchouc présentes au sein du polymère résultant se trouve dans l'intervalle allant de 0,2 à 1,0 micromètre.
